# EUROPEAN PATENT APPLICATION

(11) **EP 4 626 051 A1**
(43) Date of publication of application: **01.10.2025**
(21) Application number: 22966480.0
(22) Date of filing: 22.11.2022
(51) Int. Cl.: H04W 12/06, H04W 92/24

(54) **NETWORK NODE DEVICE, COMMUNICATION SYSTEM, AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); SUZUKI, Yuji, Tokyo 100-6150 (JP); YAMAUCHI, Kenta, Tokyo 100-6150 (JP)
(74) Representative: Hoffmann Eitle
(86) International application number: PCT/JP2022/043239
(87) International publication number: WO 2024/111070

(57) **Abstract**

A network node apparatus includes: a reception unit configured to receive an authentication request from an application server that receives an access from a terminal; a transmission unit configured to transmit an inquiry about presence or absence of specific information to another network node apparatus by using secret information generated from the specific information included in the authentication request; and a control unit configured to determine a transmission destination of the authentication request based on a response to the inquiry.

## Description

### Technical Field

The present invention relates to a technique for ID linkage.

### Background Art

In 3GPP (registered trademark) (3rd Generation Partnership Project), in order to realize further increase in system capacities, further increase in data transmission rates, further reduction in delays in radio sections, and the like, a radio communication scheme called 5G or NR (New Radio) (hereinafter, the radio communication scheme is referred to as "5G" or "NR") has been developed. In 5G, various radio technologies have been studied in order to satisfy the requirement that the delay in the radio section be less than or equal to 1 ms while achieving a throughput greater than or equal to 10 Gps.

In NR, a network architecture including an 5GC (5G Core Network) corresponding to an EPC (Evolved Packet Core) which is a core network in an LTE (Long Term Evolution) network architecture and an NG-RAN (Next Generation-Radio Access Network) corresponding to an E-UTRAN (Evolved Universal Terrestrial Radio Access Network) which is a RAN (Radio Access Network) in the LTE network architecture is under study (for example, Non-Patent Document 1).

Further, for example, an architecture in which a Northbound interface between an NEF (Network Exposure Function) and an AF (Application Function) in a 5G system is configured by a CAPIF (Common Application Programming Interface) framework has been studied (for example, Non-Patent Documents 2, 3, and 4).

In addition, an ID linkage technology that enables ID information that has been registered by users separately for each site to be managed in a unified manner has been attracting attention. In recent IT technologies, OpenID (registered trademark) Connect is generally used for ID linkage.

### Citation List

### Non-Patent Document

[Non-Patent Document 1] 3GPP TS 23.501 V17.6.0 (2022-09)
[Non-Patent Document 2] 3GPP TS 23.222 V17.7.0 (2022-09)
[Non-Patent Document 3] 3GPP TS 33.122 V17.0.0 (2022-03)
[Non-Patent Document 4] 3GPP TR 23.700-95 V1.5.0 (2022-09)

### SUMMARY OF THE INVENTION

### Problems to be Solved by the Invention

In a 5G system, when a technology for ID linkage such as OpenID (registered trademark) Connect is assumed to be introduced, it is assumed that user information registered in a mobile network is used in an operation for ID linkage.

When a user (user A) who is currently connected to a mobile network of one country (country A) attempts to access an application server (= RP (Relying Party)) located in a different country (country B), it is assumed that the application server will send an authentication request to the mobile network in country B.

However, since user information of the user A does not exist in the mobile network of the country B, the process for the login authorization for the user A cannot be executed. In this case, the user A cannot log in to the application server and cannot receive the service.

The present invention has been made in view of the above, and an object of the present invention is to provide a technique for a network node apparatus that receives an authentication request related to a specific user to grasp a mobile network in which information related to the specific user exists. Means for Solving the Problems

According to the disclosed technique, there is provided a network node apparatus including:
a reception unit configured to receive an authentication request from an application server that receives an access from a terminal;
a transmission unit configured to transmit an inquiry about presence or absence of specific information to another network node apparatus by using secret information generated from the specific information included in the authentication request; and
a control unit configured to determine a transmission destination of the authentication request based on a response to the inquiry.

### Effects of the Invention

According to the disclosed technique, a technique is provided for a network node apparatus that receives an authentication request related to a specific user to grasp a mobile network in which information related to the specific user exists.

### Brief Description of Drawings

[Fig. 1] FIG. 1 is a diagram for explaining an example of a communication system;
[Fig. 2] FIG. 2 is a diagram for explaining an example of a communication system under a roaming environment;
[Fig. 3] FIG. 3 is a diagram showing an example of an API call;
[Fig. 4] FIG. 4 is a diagram showing an example of a communication system according to an embodiment of the present invention;
[Fig. 5] FIG. 5 is a sequence diagram of a first embodiment;
[Fig. 6] FIG. 6 is a sequence diagram of the first embodiment;
[Fig. 7] FIG. 7 is a sequence diagram of the first embodiment;
[Fig. 8] FIG. 8 is a sequence diagram of a second embodiment;
[Fig. 9] FIG. 9 is a block diagram of a third embodiment;
[Fig. 10] FIG. 10 is a sequence diagram of the third embodiment;
[Fig. 11] FIG. 11 is a diagram showing an example of a functional configuration of the authorization apparatus 40 according to the embodiment of the present invention;
[Fig. 12] FIG. 12 is a diagram showing an example of a functional configuration of a data storing apparatus 70 according to an embodiment of the present invention;
[Fig. 13] FIG. 13 is a diagram showing an example of a hardware configuration of an apparatus according to an embodiment of the present invention;
[Fig. 14] FIG. 14 is a diagram showing an example of a configuration of a vehicle in an embodiment of the present invention. Description of Embodiments

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, an existing technology is used as appropriate. The existing technology is, for example, existing LTE or existing NR (5G), but is not limited to existing LTE or existing NR.

In the present embodiment, OpenID (registered trademark) Connect (OIDC) is used as the ID linkage mechanism. However, the use of OIDC is merely an example, and a mechanism other than OIDC may be used as the ID linkage mechanism.

In the embodiment of the present invention, a radio parameter and the like being "configured" may mean that a predetermined value is pre-configured, or may mean that a radio parameter notified from a network node apparatus or a terminal 20 is configured.

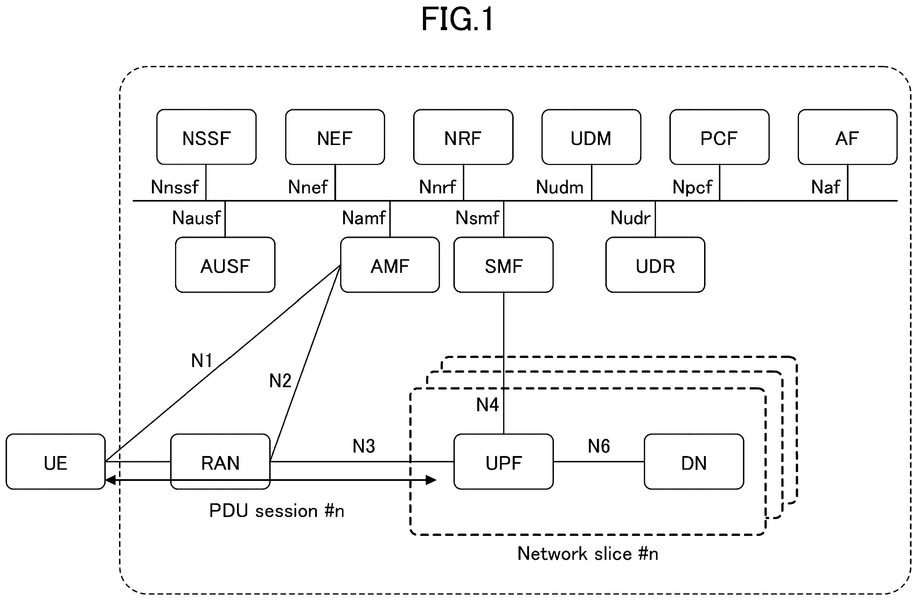

FIG. 1 is a diagram for explaining an example of a communication system. As shown in FIG. 1, the communication system includes a UE which is a terminal 20 and a plurality of network node apparatuses. Hereinafter, it is assumed that one network node apparatus corresponds to each function, but one network node apparatus may realize a plurality of functions, or a plurality of network node apparatuses may realize one function. In addition, "connection" described below may be logical connection or physical connection.

A RAN (Radio Access Network) is a network node apparatus having a radio access function, which may include the base station and is connected to a UE, an AMF (Access and Mobility Management Function), and a UPF (User plane function). The AMF is a network node apparatus 30 having functions of termination of a RAN interface, termination of a NAS (Non-Access Stratum), registration management, connection management, reachability management, mobility management, and the like. The UPF is a network node apparatus having functions such as a PDU (Protocol Data Unit) session point for externally interconnecting with a data network (DN), routing and forwarding of packets, and QoS (Quality of Service) handling of a user plane. The UPF and the DN constitute a network slice. In the radio communication network according to an embodiment of the present invention, a plurality of network slices are established.

An AMF is connected to a UE, a RAN, an SMF (Session Management function), an NSSF (Network Slice Selection Function), an NEF (Network Exposure Function), an NRF (Network Repository Function), a UDM (Unified Data Management), a UDR (Unified Data Repository), an AUSF (Authentication Server Function), a PCF (Policy Control Function), and an AF (Application Function). The AMF, the SMF, the NSSF, the NEF, the NRF, the UDM, the UDR, the AUSF, the PCF, and the AF are network node apparatuses that are interconnected via interfaces Namf, Nsmf, Nnssf, Nnef, Nnrf, Nudm, Nudr, Nausf, Npcf, and Naf based on their respective services.

The SMF is a network node apparatus 30 having functions such as session management, IP (Internet Protocol) address assignment and management for a UE, a DHCP (Dynamic Host Configuration Protocol) function, an ARP (Address Resolution Protocol) proxy, a roaming function, and the like. The NEF is a network node apparatus 30 having a function of notifying other NFs (Network Functions) of capabilities and events. The NSSF is a network node apparatus 30 having functions of selecting a network slice to which the UE is connected, determining an allowed NSSAI (Network Slice Selection Assistance Information), determining an NSSAI to be set, determining an AMF set to which the UE is connected, and the like. The PCF is a network node apparatus having a function of performing policy control of the network. The AF is a network node apparatus having a function of controlling the application server. The NRF is a network node apparatus having a function of discovering an NF instance that provides a service. The UDM is a network node apparatus 30 that manages subscriber data and authentication data. The UDM also stores (manages) dynamic information that reflects the connection status and the like of the terminal 20. The UDM is connected to a UDR (User Data Repository) that stores the data.

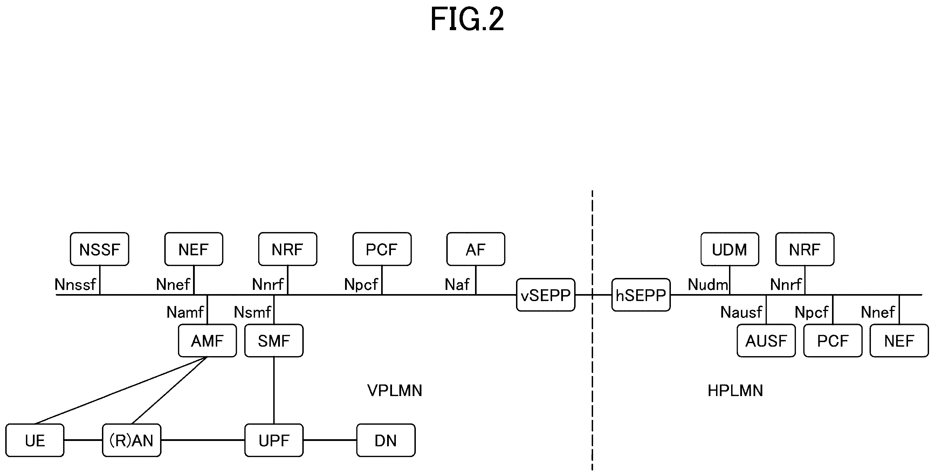

FIG. 2 is a diagram for explaining an example of a communication system in a roaming environment. As shown in FIG. 2, the network is configured by a UE which is the terminal 20 and a plurality of network node apparatuses. The SEPP is a non-transparent proxy that filters control plane messages between Public Land Mobile Networks (PLMNs). The vSEPP shown in FIG. 2 is the SEPP in the visited network, and the hSEPP is the SEPP in the home network.

As shown in FIG. 2, the UE is in a roaming environment connected to the RAN and the AMF in a Visited PLMN (VPLMN). The VPLMN and the HPLMN (Home PLMN) are connected via vSEPP and hSEPP. The UE may communicate with the UDM of the HPLMN via the AMF of the VPLMN, for example.

The operation in the present embodiment may be performed by either of the configurations shown in FIGs. 1 and 2. The operation of the present embodiment may be performed in a configuration other than the configurations shown in FIGs. 1 and 2. That is, the authorization apparatus 40, the user information exposure apparatus 50, the data storing apparatus 70, and the like, which will be described later, are assumed to be network node apparatuses in 5GS, but the present invention is not limited to this assumption, and the authorization apparatus 40, the user information exposure apparatus 50, and the like may be apparatuses in a communication system other than 5GS.

In the NEF described above, an API (Application Programming Interface) that can be called from an AF can be implemented by applying a CAPIF (Common API Framework) architecture. The CAPIF architecture provides a mechanism for supporting service API operation, for example, allowing an API calling source (invoker) to discover a service API provided by an API provider and to perform communication using the service API.

Note that an application server 60 of an API calling source described below may be provided in the AF, and an API exposing function (AEF) may be provided in the NEF. However, the present invention is not limited to this, and the application server 60 and the AEF may be provided in any network node apparatus. The application server 60 may be provided in a certain terminal or a certain base station. The application server 60 may be referred to as an API calling source (invoker).

The resource owner may be a network node apparatus, a terminal 20, a base station, or other apparatuses. In the present embodiment, it is assumed that the terminal 20 acts as the resource owner.

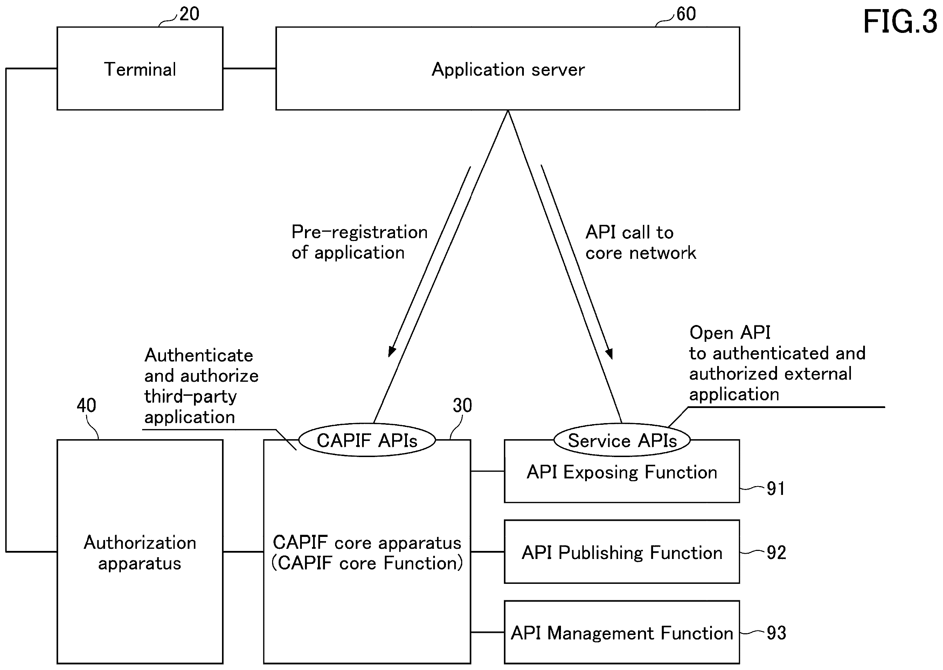

FIG. 3 is a diagram illustrating an example of an API call. In the core network of 3GPP (Registered trademark), APIs are opened for external applications, and the APIs can be called from the application server 60 of the third party to a network node apparatus.

As illustrated in FIG. 3, an application of an API-calling source is registered in advance in the CAPIF core apparatus 30 from the application server 60 by using the CAPIF-API. The CAPIF core apparatus 30 authenticates and authorizes the application. As illustrated in FIG. 3, a service API is opened for an authenticated and authorized application by an API exposing function (also referred to as AEF) 91, and the application of the API-calling source can use a function of the API by calling the API.

The APF (API Publishing Function) 92 has a function of publishing service API information of an API provider to the CAPIF core apparatus 30. The AMF (API Management Function) 91 has various management functions related to API calls.

In addition, by extending the CAPIF, and the terminal 20 (resource owners) can authorize the application server 60 to call an API via the authorization apparatus 40. For example, the mechanism of OAuth2. 0 can be used to realize authorization.

Hereinafter, a first embodiment, a second embodiment, and a third embodiment will be described. The first embodiment is a basic embodiment. The second embodiment and the third embodiment are modifications of the first embodiment. However, each of the second embodiment and the third embodiment may be implemented independently of the first embodiment. Further, the first embodiment, the second embodiment, and the third embodiment may be combined.

In the following description, unless otherwise specified, a "user" is a subject (typically, a person) who uses a terminal, and a "terminal" is a device such as a smartphone. However, the "terminal" may be referred to as a "user".

### (Problem of First Embodiment)

As described above, attention has been paid to the ID linkage technology that enables ID information that has been registered by the user in a distributed manner for each site to be managed in a unified manner. In recent IT technologies, OpenID (registered trademark) Connect is generally used for ID linkage.

However, in 5GS (5G system) which is a communication system assumed to be used in the present embodiment, neither the ID linkage nor OpenID (registered trademark) Connect is introduced.

Instead of introducing ID linkage in 5GS, it is also conceivable to implement ID linkage in the application layer. However, in this case, only static user information is likely to be handled in user information linkage constituting ID linkage.

On the other hand, by providing ID linkage 5GS, it is possible to handle dynamic user information that can be acquired from 5GS, and as a result, the user can receive a service that is more suitable for the user's preference or state from the application server 60 to which the user logs in.

Since OAuth2.0 is introduced in 5GS, the authorization endpoint function of OIDC (OpenID (registered trademark) Connect) OP (OpenID (registered trademark) Provider) and the token endpoint function of OIDC OP can be included by slightly extending the CAPIF authorization function (authorization apparatus 40) and the CAPIF core function (CAPIF core apparatus 30), respectively. However, no functions corresponding to the user information endpoint functions of OIDC OP exist in 5GS. Therefore, the conventional technique has a problem that ID linkage based on OIDC cannot be appropriately performed.

### (Outline of First Embodiment)

In the present embodiment, OIDC is introduced into a communication system (5GS is assumed here) so that the communication system can provide ID linkage including dynamic linkage of user information.

In particular, the CAPIF authorization function (referred to as authorization apparatus 40) includes the OIDC OP authorization endpoint function.

The CAPIF core function (referred to as the CAPIF core apparatus 30) is provided with an interface to the authorization apparatus 40 to allow it to generate an ID token. This allows the CAPIF core apparatus 30 to perform the token endpoint function of the OIDC OP.

Further, in the communication system, a user information exposure apparatus 50 as a "user information exposure function" is newly introduced, and a user information endpoint function of the OIDC OP can be executed.

In the OIDC, user information is transmitted from the OIDC OP to an OIDC RP (Relying Party). In the present embodiment, the user information is information that characterizes each identifier of a user (that is, each of a plurality of identifiers for one SUPI (Subscription Permanent Identifier)). However, the user information is not limited to this, and user information independent of the identifier may be used.

In the present embodiment, the user information is any one, any plurality, or all of static information, dynamic information, and a URI for obtaining dynamic information. In the following embodiment, user information including these three is used.

The user information exposure apparatus 50 needs to acquire (generate) user information to be exposed. Although any method may be used to acquire the user information, in the present embodiment, the UDR (corresponding to a data storing apparatus 70 described later) stores information necessary for the user information exposure apparatus 50 to generate the user information.

To be more specific, the following information (1) to (3) is stored in the corresponding area of the UDR by offline input or by using Nnef_UserInfoProvision.
(1) Static Information
(2) Dynamic information (information indicating it) to be acquired
(3) URI for obtaining dynamic information to be sent to OIDC RP

Regarding the above (2), the user information exposure apparatus 50 can access the UDM (corresponding to the data management apparatus 80 described later) using the SUPI, acquire information indicating the current state of the user (e.g., AMF registration information), and include the information (or a part of the information) in the user information as dynamic information.

### (System Configuration)

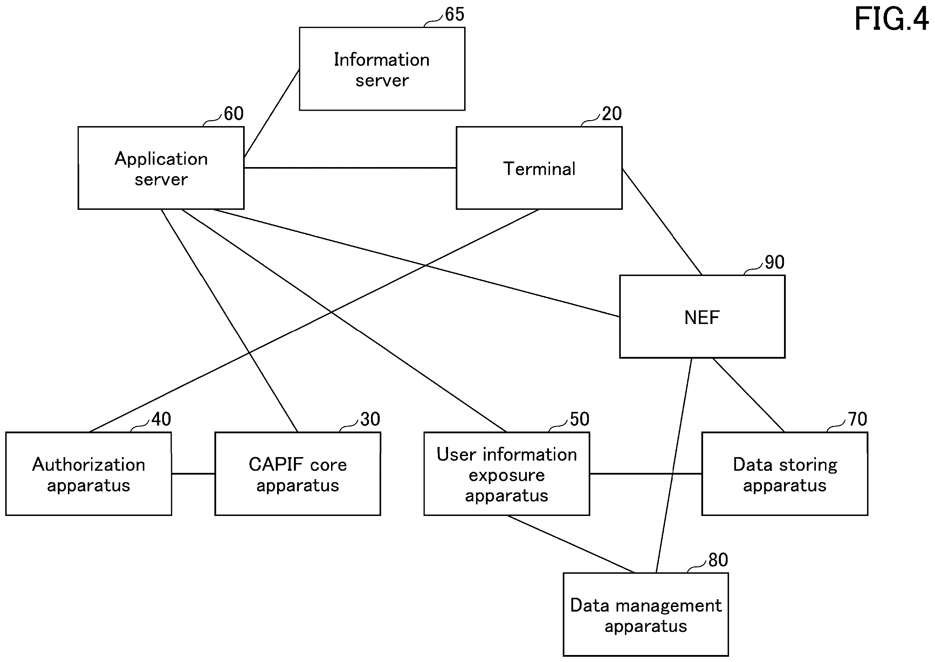

FIG. 4 shows an example of the configuration of the communication system in the first embodiment. The configuration shown in FIG. 4 is basically applied to the second embodiment and the third embodiment. However, in the third embodiment, it is assumed that each MNO (Mobile Network Operator) has the configuration shown in FIG. 4. The MNO may be referred to as a "mobile network".

As illustrated in FIG. 4, the communication system according to the present embodiment includes a terminal 20 (user terminal 20), a CAPIF core apparatus 30, an authorization apparatus 40, a user information exposure apparatus 50, an application server 60, an information server 65, a data storing apparatus 70, a data management apparatus 80, and an NEF 90. In FIG. 4, each apparatus can communicate with at least another apparatus connected by a line shown in the figure.

In the present embodiment (the first embodiment to the third embodiment), it is assumed that the data storing apparatus 70 corresponds to the UDR and the data management apparatus 80 corresponds to the UDM, but the present invention is not limited thereto. Further, the "data storing apparatus 70 and the data management apparatus 80" may be configured by one apparatus (which may be referred to as a data storing apparatus or a network node apparatus). Further, the "CAPIF core apparatus 30 and the authorization apparatus 40" may be one apparatus. This one apparatus may be referred to as a core apparatus, an authorization apparatus, or a network node apparatus.

In the present embodiment, it is assumed that the terminal 20 includes a browser and that an apparatus that communicates with the terminal 20 includes a web server function. The terminal 20 transmits information to another apparatus as an HTTP request and receives information from another apparatus as an HTTP response. However, such assumption is an example, and the present invention is not limited to such assumption.

In the following description, communication between the application server 60 and the authorization apparatus 40 is performed by redirection via a terminal (browser), but this is merely an example. The system may be configured to directly communicate between the application server 60 and the authorization apparatus 40.

### (First Embodiment: Configuration of Dynamic Information)

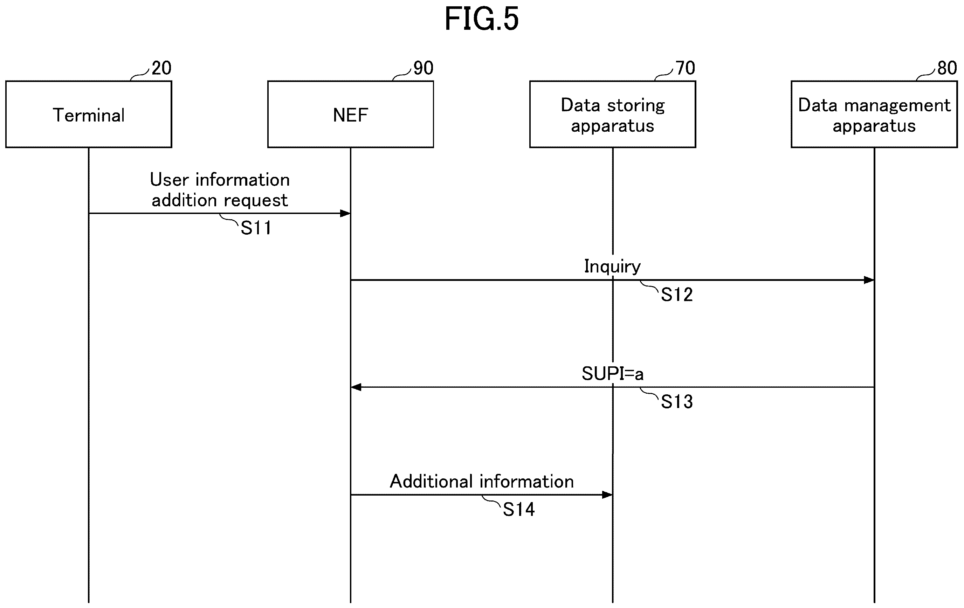

An example of a sequence for configuring the dynamic information will be described with reference to FIG. 5. Here, as an example, a case where the configuration is performed via the NEF 90 is shown.

It is assumed that "SUPI = a, [identifier: user information] = [a1: phone number, mail address]" is stored in the data storing apparatus 70 by offline configuration at the time of a user's contract. This indicates that the SUPI of the user's terminal 20 is a, there is a1 as the identifier corresponding to SUPI = a, and there are "phone number, mail address" as the user information corresponding to a1.

In S11 (step 11), the terminal 20 transmits a user information addition request to the NEF 90. The user information addition request is, for example, an Nnef_UserInfoProvision request. The user information addition request includes the following information.

"GPSI = A, additional information ([identifier: user information] = [a2: phone number, mail address, " in-use access check ","RAT confirmation in use", access confirmation URI, RAT confirmation URI])"

The information is information for adding the user information whose identifier is a2.

The NEF 90 inquires of the data management apparatus 80 (S12), and acquires SUPI = a corresponding to GPSI = A (S13), thereby converting GPSI = A into SUPI = a.

In S14, the NEF 90 writes the additional information to the data of SUPI = a in the data storing apparatus 70.

### (First Embodiment: OIDC Procedure)

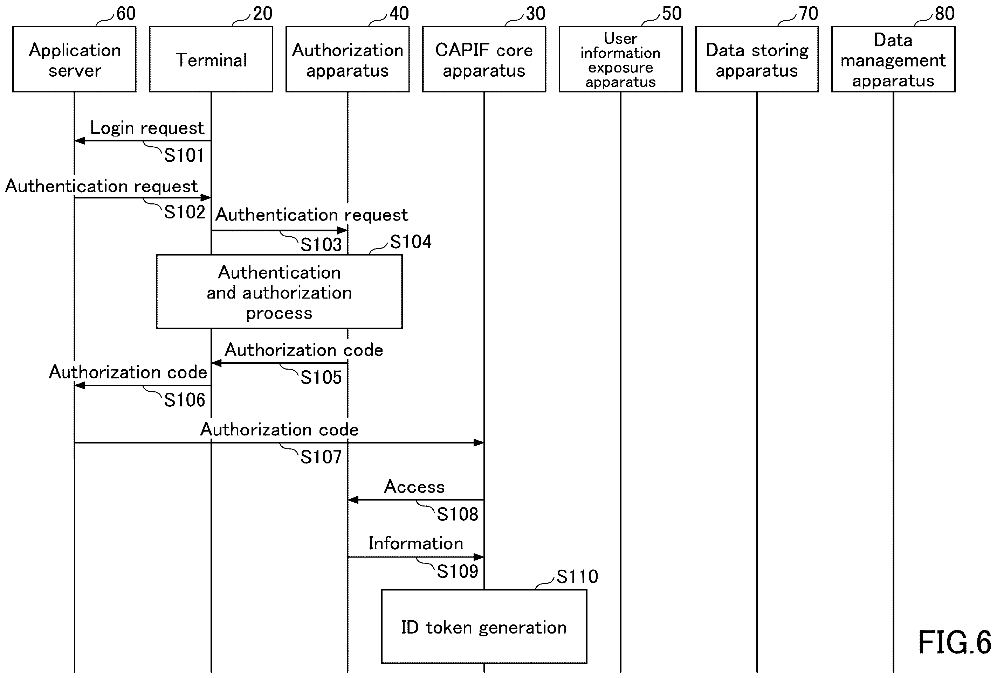

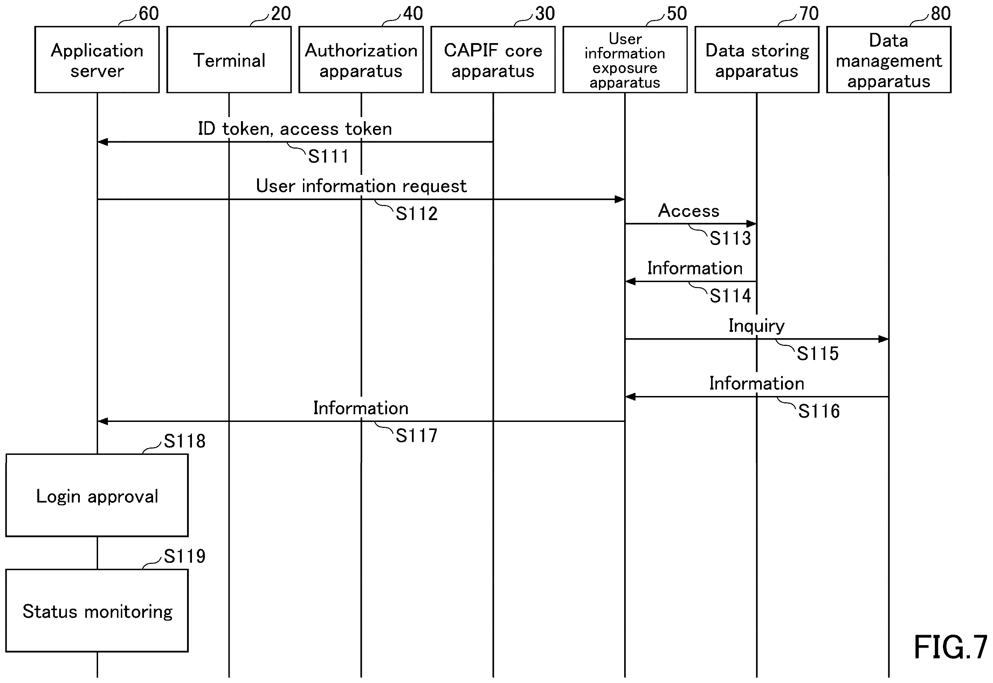

The OIDC procedure in the first embodiment will be described with reference to flowcharts of FIGs. 6 and 7.

In S101, the terminal 20 accesses the application server 60 (= RP) and makes a login request. Since the application server 60 cannot directly handle the login, the following OIDC procedure is executed.

In S102 to S103, the application server 60 transmits an authentication request to the authorization apparatus 40 via a browser of the terminal 20 (by redirection).

In S104, the authorization apparatus 40 authenticates the terminal 20 (or the user) via the browser in the terminal 20 or by a mechanism in the 5GS, and obtains authorization from the user for "the application server 60 accessing user information". In this process, for example, an input screen is displayed on the terminal 20 by the browser, and the user inputs information indicating that "the application server 60 is permitted to access the user information" from the input screen. Information indicating authorization (authorization permission information) is sent to the authorization apparatus 40. For example, at this time, the user inputs user identifier = a2 from the input screen. That is, in S104, the authorization apparatus 40 acquires the user identifier = a2.

The content of the "authorization" is an example. The "authorization" may be authorization from the user for "the application server 60 using a specific API" or may be authorization for other specific processing of the application server 60. The content of "authorization" is the same in the second embodiment and the third embodiment.

In S105 to S106, the authorization apparatus 40 transmits an authorization code indicating that access to the user information has been authorized by the user to the application server 60 via the browser in the terminal 20.

In S107, the application server 60 presents (transmits) the authorization code to the CAPIF core apparatus 30. In S108 to S109, the CAPIF core apparatus 30 accesses the authorization apparatus 40 and obtains information regarding authentication (e.g., authentication execution time and authentication method). In S109, the user identifier = a2 may be notified from the authorization apparatus 40 to the CAPIF core apparatus 30.

In S110, the CAPIF core apparatus 30 generates an ID token based on the information obtained from the authorization apparatus 40. The CAPIF core apparatus 30 generates an access token.

In S111 of FIG. 7, the CAPIF core apparatus 30 transmits the ID token and the access token to the application server 60. In S112, the application server 60 transmits a user information request to the user information exposure apparatus 50. The user information request includes the user identifier = a2 and the access token. The application server 60 may obtain the user identifier = a2 in S105 and S106, may obtain the user identifier = a2 in S111, or may obtain the user identifier = a2 at other timings. For example, the user identifier = a2 may be included in the ID token of S111.

In S113 to S114, the user information exposure apparatus 50 accesses the data storing apparatus 70, acquires information corresponding to the user identifier = a2, and confirms that SUPI = a corresponds to the user identifier = a2.

The user information exposure apparatus 50 detects that the information includes "access confirmation in use" and "RAT confirmation in use", and thus inquires of the data management apparatus 80 using SUPI = a in S115 to S116, and acquires "3GPP access" and "NR" as the access scheme in use and the RAT in use of the terminal 20 (user).

In S117, the user information exposure apparatus 50 generates 'phone number, mail address, "access in use = 3GPP access", "RAT in use = NR", access confirmation URI, RAT confirmation URI' as user information, and transmits the user information to the application server 60.

In S118, the application server 60 permits login of the user identifier = a2 based on the ID token received from the CAPIF core apparatus 30, and provides a service to the user (the terminal 20) based on the user information.

Here, it is assumed that both the access confirmation URI and the RAT confirmation URI are URIs in the information server 65. The information server 65 may be the data management apparatus 80, and in this case, the access confirmation URI and the RAT confirmation URI may be URIs disclosed by the NEF 90. In S119, the application server 60 monitors the access confirmation URI and the RAT confirmation URI (that is, the information server 65), and prepares for a change in the state of the terminal 20 corresponding to the user identifier = a2.

The technique according to the first embodiment described above can implement OIDC in 5GS. Further, since dynamic information can be handled as user information in the OIDC, the service can be flexibly adapted to the situation of the terminal 20.

In the above example, the information of the access in use and the information of the RAT in use are acquired as the dynamic information acquired by the communication system, but these are examples and the present invention is not limited to these. For example, by using a positioning mechanism in a communication system, the position information of the terminal 20 can be acquired as dynamic information.

### (Problem of Second Embodiment)

Next, the second embodiment will be described. First, the problem of the second embodiment will be described. In OIDC, the prompt parameter provides fine control over the operation of the OP's authorization endpoint in authenticating the end user.

That is, the following description is given in the technical specification of OIDC (OpenID Connect Core 1.0 incorporating errata set 1). The authorization server described below corresponds to the authorization apparatus 40.

'The authorization server must attempt end-user authentication if:
The end user has not yet been authenticated;
The authentication request contains a prompt parameter with the value "login". In this case, even if the end user has been authenticated, the authorization server must re-authenticate the end user.

The authorization server must not interact with the end user if:
The authentication request contains a prompt parameter with the value "none". In this case, if the end user has not been authenticated yet or cannot be silently authenticated, the authorization server must return an error.'

In the authorization apparatus 40, it is important to appropriately perform the process in the case where 'the authentication request includes the prompt parameter having the value" none "' in order to make the user feel that transition between applications is smooth.

In the second embodiment, processing in the case where 'the authentication request includes a prompt parameter having a value "none"' will be mainly described. In the following description, the authentication request in the case where 'the authentication request includes the prompt parameter having the value "none "' may be referred to as 'authentication request without prompt'.

### (Outline of Second Embodiment)

In the second embodiment, when receiving an authentication request without prompt, the authorization apparatus 40 confirms that the terminal 20 (or the user, or both the terminal 20 and the user) is authenticated based on the result of 5GS authentication and/or the result of FIDO authentication. Further, the authorization apparatus 40 confirms whether or not the terminal 20 (user) is permitted to perform automatic login. When these confirmations are obtained, the authorization apparatus 40 issues an authorization code to the application server 60.

In the second embodiment, the terminal 20 registers information on the terminal authenticator capability (such as FIDO) in the data management apparatus 80 in the registration procedure for registration in the communication system (5GS in this case). Note that FIDO is an abbreviation for Fast Identity Online. In the FIDO authentication, high security can be realized by performing personal authentication (biometric authentication or the like) in a local environment of the terminal 20 and authentication by a public key authentication method.

In the second embodiment, in a case where 'the authentication request includes the prompt parameter having the value "none"' and in a case where 'the user (terminal 20) has not been authenticated yet (in the application layer)', the authorization apparatus 40 executes the following processing in the authentication stage and the login authorization stage. The condition for the case where 'the user (terminal 20) has not been authenticated (in the application layer)' need not be used.

### [Authentication Stage]

The authorization apparatus 40 first confirms the presence of AMF registration information with the data management apparatus 80. The fact that the AMF registration information of the terminal 20 is stored in the data management apparatus 80 means that the terminal 20 has been authenticated in the communication system (the authentication has succeeded) .

Thereafter, the authorization apparatus 40 performs the following (i) and (ii) as confirmation of the result of authentication (for example, biometric authentication) performed between the user and the terminal 20.
(i) When it is detected that the terminal 20 has the terminal authenticator capability based on the information of the terminal authenticator capability in the AMF registration information, the authorization apparatus 40 accesses the FIDO server, and when the storage information indicating that the terminal 20 has been authenticated is stored, the authorization apparatus 40 determines that the terminal 20 (and the user) has been authenticated.
(ii) If there is no information of the terminal authenticator capability in the AMF registration information, or if it is detected according to the information that the terminal 20 does not have the terminal authenticator capability, the authorization apparatus 40 determines that the terminal 20 has been authenticated.

### [Login Authorization Stage]

The authorization apparatus 40 confirms that the subscriber information of the data management apparatus 80 includes information indicating that automatic login is permitted.

The authorization apparatus 40 transmits the authorization code to the application server 60 without performing re-authentication in the application layer after the confirmation in the authentication stage and the login authorization stage. Note that, of the above-described confirmation in the authentication stage and the confirmation in the login authorization stage, the confirmation in the login authorization stage need not be performed.

Further, regarding the above (ii), when the terminal 20 does not have the terminal authenticator capability, the authorization apparatus 40 may determine that the terminal 20 (or the user) is not authenticated, and may not issue the authorization code.

### (Processing Procedure of Second Embodiment)

### <Terminal Registration>

The terminal 20 includes the information of the terminal authenticator capability in the registration request in the registration procedure of the terminal 20. The AMF includes the information of the terminal authenticator capability when the terminal 20 is registered in the data management apparatus 80. That is, by the terminal registration process, the information of the terminal authenticator capability of the terminal 20 is stored in the data management apparatus 80. It is assumed that the terminal 20 can perform FIDO authentication if the terminal 20 has the terminal authenticator capability, and the terminal 20 cannot perform FIDO authentication if the terminal 20 does not have the terminal authenticator capability.

### <OIDC Procedure>

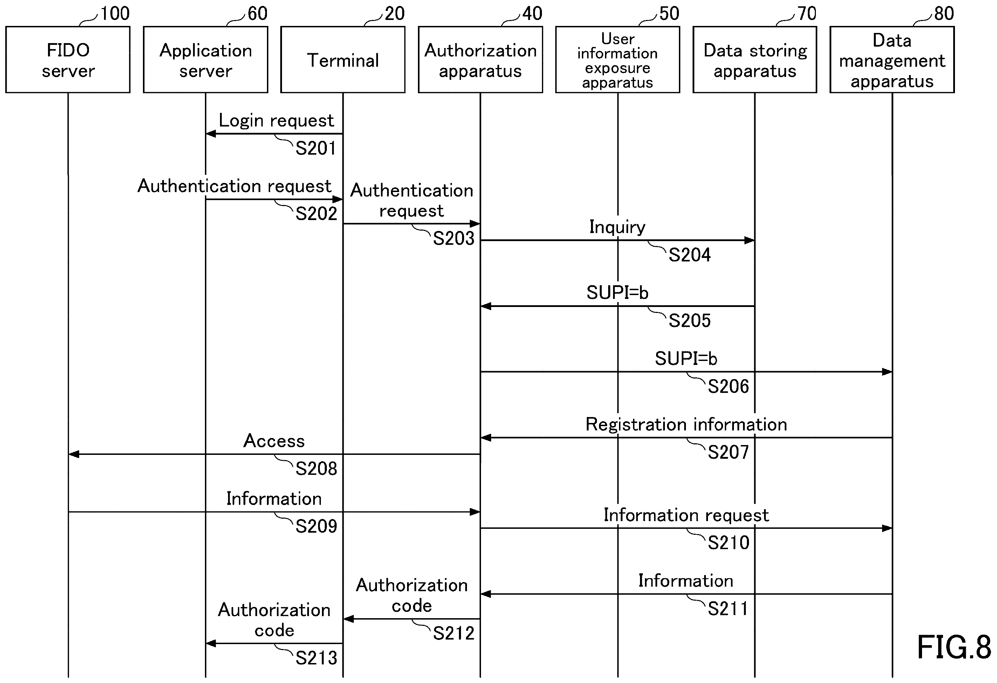

Next, the OIDC procedure will be described with reference to the sequence diagram of FIG. 8. In the following sequence, an FIDO server 100 is used. The FIDO server 100 may be a network node apparatus in the communication system or may be an apparatus outside the communication system. The FIDO server 100 may be referred to as an authentication server.

In S201 the terminal 20 accesses the application server 60 (= RP), and makes a login request. Since the application server 60 cannot directly handle the login, the following OIDC procedure is executed.

In S202 to S203, the application server 60 transmits an authentication request to the authorization apparatus 40 via the browser of the terminal 20. The authentication request includes the following parameters:
(a) Client_id parameter: This parameter has an identifier of the application server 60 as a value.
(b) Prompt parameter: This parameter has "none" as a value.
(c) Login_hint parameter: This parameter has a user mail address as a value.

Note that the "user mail address" is used as identification information of the terminal 20 (or user) as described below. The "user mail address" is an example, and information other than the "user mail address" may be used.

In S204 to S205, the authorization apparatus 40 inquires of the data storing apparatus 70 using the user mail address and obtains SUPI = b.

In S206 to S207, the authorization apparatus 40 acquires AMF registration information (specific registration information) corresponding to SUPI = b from the data management apparatus 80, and confirms that the information of the terminal authenticator capability of the terminal 20 is present in the AMF registration information. If there is no AMF registration information corresponding to SUPI = b, for example, an error is returned to the application server 60.

In S208 to S209, the authorization apparatus 40 accesses the FIDO server 100 and obtains information indicating that there is authenticated storage information for the terminals 20. If there is no authenticated storage information, for example, an error is returned to the application server 60.

In S210 to S211, the authorization apparatus 40 acquires, from the data management apparatus 80, CAPIF use setting information of the subscriber information of SUPI = b, and confirms that the identifier of the application server 60 is included in the "automatic login permission target client_id parameter" in the CAPIF use setting information. That is, it is confirmed that automatic login to the application server 60 is permitted.

In S212 to S213, the authorization apparatus 40 transmits the authorization code to the application server 60 without performing authentication in the application layer. The authentication in the application layer is, for example, the authentication and authorization process of S104 described in the first embodiment. The subsequent processing is the same as the processing from S107 in the first embodiment.

According to the second embodiment described above, when the authentication request includes the prompt parameter having the value "none", the authorization code can be issued quickly without returning an error.

### (System Configuration in Third Embodiment)

Next, a third embodiment will be described. In both the first embodiment and the second embodiment, it is assumed that the system configuration and the system operation are implemented for each MNO. It is also assumed that one or more MNOs exist for each area (e.g., country).

In the third embodiment, MNO #A exists in country A, MNO #B exists in country B, and MNO #C exists in country C. In addition, a user's terminal 20A is located in the network of MNO #A in country A, and an application server 60B that provides an application service to the terminal 20A is located in country B.

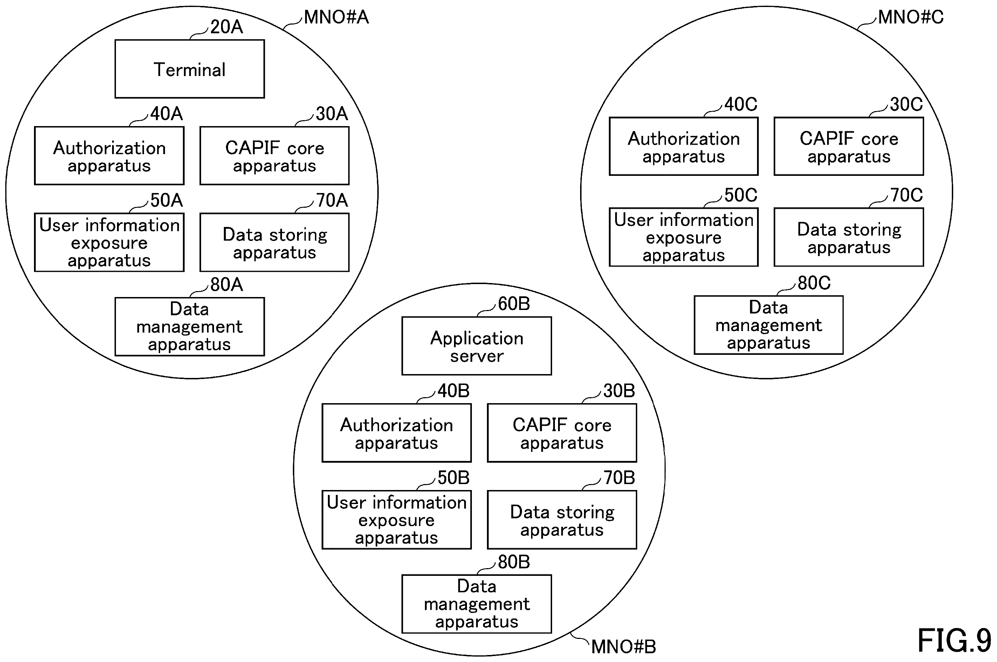

In this case, as shown in FIG. 9, in addition to the terminal 20A and the application servers 60B, each country (each MNO) includes an authorization apparatus 40, a CAPIF core apparatus 30, a user information exposure apparatus 50, a data storing apparatus 70, a data management apparatus 80, and the like.

The authorization apparatus 40 included in the MNO #A is referred to as an authorization apparatus 40A, the authorization apparatus 40 included in the MNO #B is referred to as an authorization apparatus 40B, and the authorization apparatus 40 included in the MNO #C is referred to as an authorization apparatus 40C. The same applies to other apparatuses.

Each MNO can perform the operation of either the first embodiment or the second embodiment. Further, in the third embodiment, as described later, an operation for solving the following problem can be performed.

### (Problem in Third Embodiment)

As illustrated in FIG. 9, in a case where the user's terminal 20A is located under the MNO #A in the country A and the application server 60B (RP) is located in the country B, when the operation of the first embodiment or the second embodiment is performed, the application server 60B may send an authentication request to the terminal 20A (S102 in FIG. 6 and S202 in FIG. 8).

The application server 60B only receives an IP packet requesting login from the terminal 20A, and cannot know in which country the terminal 20A is located unless a special process is performed. Further, although the application server 60B in the country B passes through the terminal 20A under the control of the MNO #A in the country A, it is unnatural to trust the MNO #A in the country A and transmit the authentication request thereto. That is, if the application server 60B in the country B sends the authentication request to an MNO, it is natural to send the authentication request to the MNO #B in the country B.

If the application server 60B transmits an authentication request related to the terminal 20A to the authorization apparatus 40B of the MNO #B, the authorization apparatus 40B or the user information exposure apparatus 50B accesses the data storing apparatus 70B and acquires the user information of the terminal 20A in the subsequent processing (S113 and S114 of FIG. 7, and S204 and S205 of FIG. 8).

However, it is considered that the user information (example: SUPI = b) of the terminal 20A existing in the area of the MNO #A in the country A does not exist in the data storing apparatus 70B of the MNO #B. If the user information of the terminal 20A is not present in the data storing apparatus 70B, the application server 60B cannot permit the terminal 20A to log in, and the terminal 20A cannot use the service of the application server 60B. In this case, the application server 60B may determine that it is better to use the OIDC service of the provider that deploys the service globally, for example.

In the solution to the above problem, from the viewpoint of personal information protection, the user information stored in the "data storing apparatus 70 behind the user information exposure apparatus 50" should not be shared between MNOs. Further, which user has accessed which MNO should be kept secret from MNOs that have not received an authentication request and for which a target user (target terminal) does not exist.

### (Outline of Third Embodiment)

In order to solve the above problem, in the third embodiment, when the user (terminal 20) to be authenticated and authorized cannot be found in the mobile network of the MNO, the authorization apparatus 40 of the MNO that has received the authentication request derives the hash value of the login hint parameter and inquires of other MNOs that mutually cooperate by using the hash value.

The authorization apparatus 40 that has received the authentication request first redirects the authentication request to an authorization apparatus 40 of an MNO in which the target user is found. Thereafter, the authentication and authorization process is continued in the MNO.

### (Processing Procedure of Third Embodiment)

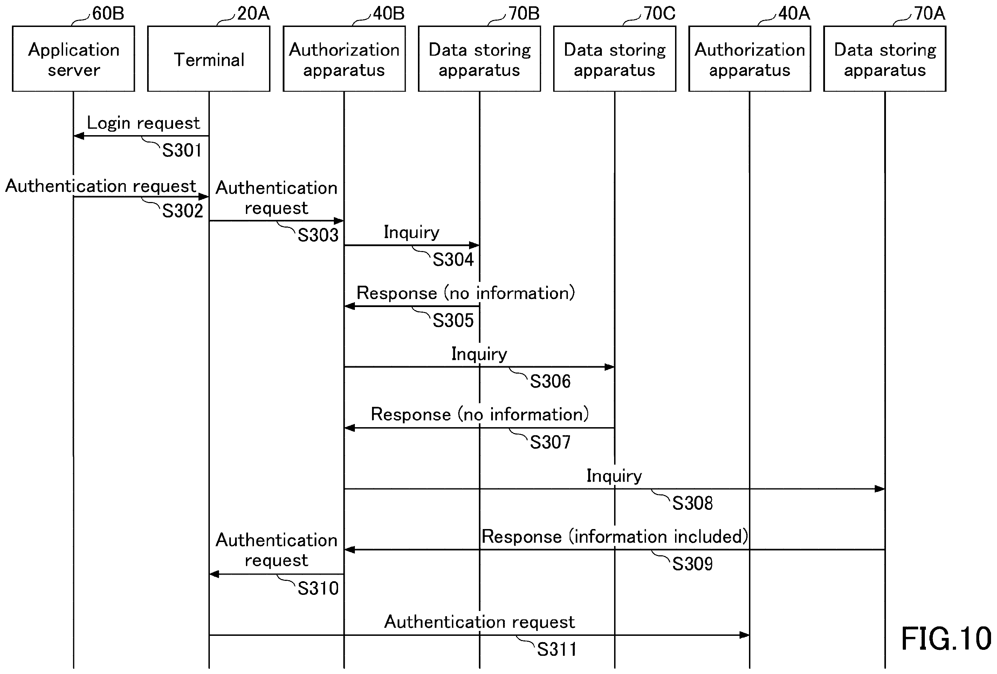

Hereinafter, a processing procedure in the third embodiment will be described with reference to the sequence diagram of FIG. 10. As a premise of the operation of FIG. 10, the MNO #A, the MNO #B, and the MNO #C mutually cooperate with respect to OIDC.

Specifically, the authorization apparatus 40 of each MNO has a function of inquiring of a network node apparatus (for example, the data storing apparatus 70) of another MNO about presence or absence of user information using secret information. The network node apparatus (for example, the data storing apparatus 70) of each MNO has a function of confirming the presence or absence of user information in response to an inquiry about the presence or absence of user information from the authorization apparatus 40 of another MNO and responding to the inquiry source with the confirmation result.

In the example of FIG. 10, the user information of the terminal 20A exists in the MNO #A. However, other MNOs do not know that the user information of the terminal 20A exists in the MNO #A. Note that the user information of the terminal 20A existing in the MNO #A is an example. Even when the user information of the terminal 20A exists in an MNO other than the MNO #A, the same operation can be performed.

In the case where the user information of the terminal 20A exists in the MNO #A, for example, "SUPI = a, [identifier: user information] = [a1: phone number, mail address]" is stored in the data storing apparatus 70A by the offline setting at the time of the user's contract.

In S301 of FIG. 10, the terminal 20A located under the MNO #A in the country A accesses the application server 60B (= RP) in the country B and makes a login request. Since the application server 60B cannot directly handle the login, the subsequent OIDC procedure is executed.

In S302 to S303, the application server 60B transmits an authentication request to the authorization apparatus 40B of the MNO #B via the browser of the terminal 20A. The authentication request includes a login hint parameter. The value of the login_hint parameter is assumed to be a mail address of the user (the terminal 20A).

In the present embodiment, an inquiry described below is made using the login hint parameter, but using the login hint parameter for the inquiry is merely an example. Any information may be used for the inquiry as long as the information is included in the authentication request received from the application server 60B and can be used for confirming the presence of the user information.

In S304, the authorization apparatus 40B inquires of the data storing apparatus 70B behind the user information exposure apparatus 50B in the MNO #B by using the value of the login_hint parameter. That is, the authorization apparatus 40B inquires of the data storing apparatus 70B whether the mail address of the terminal 20A exists. Note that the inquiry here is a process within the same MNO, and therefore, it is not necessary to use a hash value, but a hash value may be used.

In this example, since the mail address of the terminal 20A does not exist in the data storing apparatus 70B, the data storing apparatus 70B returns a response indicating that there is no information to the authorization apparatus 40B in S305.

It is assumed that the authorization apparatus 40B holds in advance a query destination (an address of the data storing apparatus 70 of another MNO that mutually cooperates, or the like) in a case where a response indicating that there is no information in the MNO #B of the authorization apparatus 40B is received.

In S306, the authorization apparatus 40B generates a hash value of the value of the login_hint parameter and, using this hash value, sends an inquiry to the data storing apparatus 70C of the mutually cooperating MNO #C to check for the presence of information. The hash value is an example of secret information. Any information may be used as the secret information as long as the information can be generated from the value of the login hint parameter and the original value cannot be known only from the information.

The data storing apparatus 70C that has received the inquiry generates a hash value of each user information (mail address in this case) held by itself, and compares the hash value with the hash value included in the inquiry, thereby determining whether there is user information having the same hash value as the hash value included in the inquiry. In this example, since the mail address of the terminal 20A does not exist in the data storing apparatus 70C, it is determined that the user information having the same hash value as the hash value included in the inquiry does not exist.

Therefore, in S307, the data storing apparatus 70C returns a response indicating that there is no information to the authorization apparatus 40B.

Subsequently, in S308, the authorization apparatus 40B transmits an inquiry about the presence or absence of information to the data storing apparatus 70A of the MNO #A which mutually cooperates, by using the hash value of the value of the login_hint parameter.

The data storing apparatus 70A generates a hash value of each user information (mail address in this case) held by itself, and compares the hash value with the hash value included in the inquiry, thereby determining whether there is user information having the same hash value as the hash value included in the inquiry. In this example, the mail address of the terminal 20A exists in the data storing apparatus 70A.

Therefore, in S309, the data storing apparatus 70A returns a response indicating that there is information to the authorization apparatus 40B. Accordingly, the authorization apparatus 40B grasps that the user information of the terminal 20A exists in the network of the MNO #A.

Subsequently, in S310 to S311, the authorization apparatus 40B transmits the authentication request received in S303 to the authorization apparatus 40A of the MNO #A.

To be specific, in the present example, the authorization apparatus 40B has received the authentication request as an HTTP request in S303, and in S310, the authorization apparatus 40B transmits the authentication request by responding to (the browser of) the terminal 20A with an HTTP response for redirecting to the authorization apparatus 40A of the MNO #A. The terminal 20A transmits the authentication request to the authorization apparatus 40A in accordance with the redirect instruction.

The processing after S311 is, for example, the same as the processing from S104 in FIG. 6 to S119 in FIG. 7 in the first embodiment. However, here, the application server 60 illustrated in FIGS. 6 and 7 is the application server 60B, and the other apparatuses are apparatuses in the MNO #A.

Further, the processing after S311 may be the same as the processing after S204 in FIG. 8 in the second embodiment. In this case, the application server 60 illustrated in FIG. 8 is the application server 60B, and the other apparatuses are apparatuses in the MNO #A.

According to the third embodiment described above, an authorization apparatus 40 of a certain MNO can know presence or absence of user information in another MNO while keeping the user information registered in the certain MNO secret from the other MNOs. Accordingly, the user (terminal 20) can use the service of the application server 60 existing in an area other than the area (country or the like) of the MNO in which the user is present under the ID cooperation.

In the third embodiment, the authorization apparatus 40 that cannot find the user information in its own MNO makes an inquiry to the data storing apparatus 70 of another MNO, but this is only an example.

The authorization apparatus 40 that cannot find the user information in its own MNO may inquire an authorization apparatus 40 of another MNO. In this case, in the case described with reference to FIG. 10, the authorization apparatus 40B that has received the response indicating that there is no information in S305 inquires of the authorization apparatus 40C of the MNO #C by using the hash value. The authorization apparatus 40C that has received the inquiry inquires of the data storing apparatus 70C using the hash value, the data storing apparatus 70C returns a response indicating no information to the authorization apparatus 40C, and the authorization apparatus 40C returns a response indicating no information to the authorization apparatus 40B.

Then, the authorization apparatus 40B inquires of the authorization apparatus 40A of the MNO #A by using the hash value. The authorization apparatus 40A that has received the inquiry inquires of the data storing apparatus 70A using the hash value, the data storing apparatus 70A returns a response indicating presence of the information to the authorization apparatus 40A, and the authorization apparatus 40A returns a response indicating the presence of the information to the authorization apparatus 40B.

### (Application Configuration)

Next, an example of a functional configuration of the authorization apparatus 40 and the data storing apparatus 70 that perform processes and operations described above will be described.

### <Authorization apparatus 40>

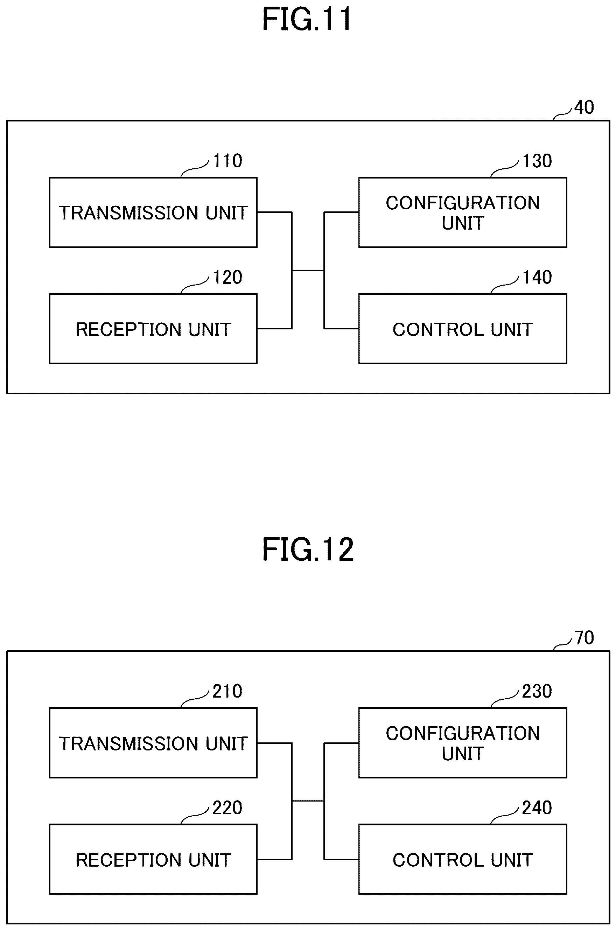

FIG. 11 is a diagram illustrating an example of a functional configuration of the authorization apparatus 40. As illustrated in FIG. 11, the authorization apparatus 40 includes a transmission unit 110, a reception unit 120, a configuration unit 130, and a control unit 140. The functional configuration shown in FIG. 11 is merely an example. The functional sections and the names of the functional units may be any as long as the operations according to the embodiment of the present invention can be performed. Each network node apparatus shown in FIG. 4 also has the configuration shown in FIG. 11.

The transmission unit 110 includes a function of generating information to be transmitted to the terminal 20 or another network node apparatus and transmitting the information in a wired or wireless manner. The reception unit 120 receives various kinds of information transmitted from the terminal 20 or another network node apparatus.

The configuration unit 130 stores various kinds of configuration information in a storage device and reads the configuration information from the storage device as necessary.

The control unit 140 controls the entire apparatus. The functional unit related to information transmission in the control unit 140 may be included in the transmission unit 110, and the functional unit related to information reception in the control unit 140 may be included in the reception unit 120.

### <Data storing apparatus 70>

FIG. 12 is a diagram illustrating an example of a functional configuration of the data storing apparatus 70. As illustrated in FIG. 12, the data storing apparatus 70 includes a transmission unit 210, a reception unit 220, a configuration unit 230, and a control unit 240. The functional configuration shown in FIG. 12 is merely an example. The functional sections and the names of the functional units may be any as long as the operations according to the embodiment of the present invention can be performed.

The transmission unit 210 includes a function of generating information to be transmitted to the terminal 20 or another network node apparatus and transmitting the information in a wired or wireless manner. The reception unit 220 receives various kinds of information transmitted from the terminal 20 or another network node apparatus.

The configuration unit 230 stores various kinds of configuration information in a storage device and reads the configuration information from the storage device as necessary.

The control unit 240 controls the entire apparatus. The functional unit related to information transmission in the control unit 240 may be included in the transmission unit 210, and the functional unit related to information reception in the control unit 240 may be included in the reception unit 220.

The present embodiment discloses at least the following Supplementary Notes 1 to 3.

### <Supplementary Note 1>

### [Clause 1]

A user information exposure apparatus including:
a reception unit configured to receive a user information request including a user identifier from an application server that is authorized to perform a specific process;
a control unit configured to obtain information corresponding to the user identifier from a data storing apparatus in a communication system; and
a transmission unit configured to transmit user information generated based on the information to the application server.

### [Clause 2]

The user information exposure apparatus as described in clause 1, wherein the user information transmitted to the application server includes information of an access destination for monitoring a state of a terminal corresponding to the user identifier.

### [Clause 3]

The user information exposure apparatus as described in clause 1 or 2, wherein the control unit obtains dynamic information from a data management apparatus that manages the dynamic information of the terminal, and includes the dynamic information in the user information.

### [Clause 4]

The user information exposure apparatus as described in clause 3, wherein when the control unit detects that there is specific information in information obtained from the data storing apparatus, the control unit accesses the data management apparatus to obtain the dynamic information.

### [Clause 5]

A communication system including:
the user information exposure apparatus as described in any one of clauses 1-4; and
an authorization apparatus that performs processes for authorizing the specific process for the application server.

### [Clause 6]

A user information exposing method executed by a user information exposure apparatus, the method including:
receiving a user information request including a user identifier from an application server that is authorized to perform a specific process;
obtaining information corresponding to the user identifier from a data storing apparatus in a communication system; and
transmitting user information generated based on the information to the application server.

Any of clauses 1 to 6 provides a technique that enables dynamic information to be provided to an application server in a mechanism for performing ID linkage. According to clause 2, the application server can continuously acquire dynamic information of the user even after the user logs in. According to clause 3, the application server can acquire dynamic information of the user when the user logs in. According to clause 4, dynamic information can be acquired only when necessary.

### <Supplementary Note 2>

### [Clause 1]

An authorization apparatus including:
a reception unit configured to receive an authentication request from an application server that receives an access from a terminal;
a control unit configured to, when a specific parameter is included in the authentication request, inquire of a network node apparatus in a communication system that the terminal uses about whether specific registration information on the terminal is stored, and determine whether the terminal is authenticated based on the inquiry result; and
a transmission unit configured to transmit an authorization code to the application server when determines at least that the terminal is authenticated.

### [Clause 2]

The authorization apparatus as described in clause 1, wherein
when the specific registration information is stored in the network node apparatus, the control unit
checks whether the terminal has terminal authenticator capability based on the specific registration information,
determines that the terminal is authenticated if the terminal has the terminal authenticator capability and an authentication server has storing information indicated that the terminal is authenticated.

### [Clause 3]

The authorization apparatus as described in clause 1 or 2, wherein the control unit checks whether automatic login is permitted based on subscriber information of a user of the terminal stored in the network node apparatus,
if the control unit determines that the terminal is authenticated and confirms that the automatic login is permitted, the transmission unit transmits the authorization code to the application server.

### [Clause 4]

The authorization apparatus as described in any one of clauses 1 to 3, wherein the specific parameter is a prompt parameter having none as a value.

### [Clause 5]

A communication system including:
the authorization apparatus as described in any one of clauses 1 to 4; and
a user information exposure apparatus that transmits user information to the application server that receives the authorization code from the authorization apparatus.

### [Clause 6]

An authorization method executed by an authorization apparatus, the authorization method including:
receiving an authentication request from an application server that receives an access from a terminal;
when a specific parameter is included in the authentication request, inquiring of a network node apparatus in a communication system that the terminal uses about whether specific registration information on the terminal is stored, and determining whether the terminal is authenticated based on the inquiry result; and
transmitting an authorization code to the application server when it is determined at least that the terminal is authenticated.

Any of clauses 1 to 6 provides a technique for an authorization apparatus to appropriately perform processing when receiving an authentication request including a specific parameter. According to clause 2, it is possible to perform appropriate processing according to the presence or absence of the terminal authenticator capability. According to clause 3, it is possible to perform an appropriate process depending on whether or not automatic login is permitted. According to clause 4, a specific parameter can be determined.

### <Supplementary Note 3>

### [Clause 1]

A network node apparatus including:
a reception unit configured to receive an authentication request from an application server that receives an access from a terminal;
a transmission unit configured to transmit an inquiry about presence or absence of specific information to another network node apparatus by using secret information generated from the specific information included in the authentication request; and
a control unit configured to determine a transmission destination of the authentication request based on a response to the inquiry.

### [Clause 2]

The network node apparatus as described in clause 1, wherein a mobile network where the network node apparatus is provided is different from a mobile network where the other network node apparatus is provided.

### [Clause 3]

A network node apparatus including:
a reception unit configured to receive an inquiry about presence or absence of specific information from another network node apparatus that receives an authentication request, the inquiry including secret information generated from the specific information included in the authentication request;
a control unit configured to check presence or absence of the specific information using the secret information; and
a transmission unit configured transmit a checking result to the other network node apparatus.

### [Clause 4]

A communication system including:
a first network node apparatus including:
a reception unit configured to receive an authentication request from an application server that receives an access from a terminal;
a transmission unit configured to transmit an inquiry about presence or absence of specific information to a second network node apparatus by using secret information generated from the specific information included in the authentication request; and
a control unit configured to determine a transmission destination of the authentication request based on a response to the inquiry, and
the second network node apparatus including:
   a reception unit configured to receive the inquiry from the first network node apparatus;
   a control unit configured to check presence or absence of the specific information using the secret information; and
   a transmission unit configured transmit a checking result to the first network node apparatus.

### [Clause 5]

A communication method executed by a network node apparatus, including:
receiving an authentication request from an application server that receives an access from a terminal;
transmitting an inquiry about presence or absence of specific information to another network node apparatus by using secret information generated from the specific information included in the authentication request; and
determining a transmission destination of the authentication request based on a response to the inquiry.

According to any of clauses 1 to 5, a network node apparatus that receives an authentication request related to a specific user can grasp a mobile network in which information related to the specific user exists. According to clause 2, for example, even when a terminal that is currently attached to an MNO in a country accesses an application server located in another country, it can still use the service offered by that application server through ID linkage.

### (Hardware Configuration)

The block diagrams (FIGS. 11 and 12) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

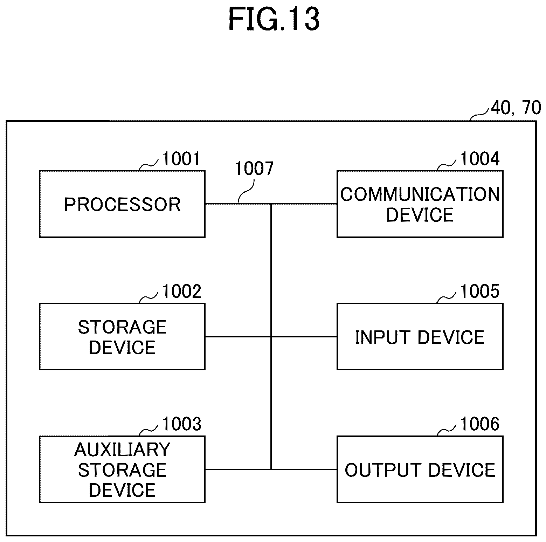

For example, the base station 10, and the terminal 20 and the like in one embodiment of this disclosure may function as a computer for performing the processing of a radio communication method of this disclosure. FIG. 13 is a diagram illustrating an example of a hardware configuration of the authorization apparatus 40 and the data storing apparatus 70 and the like according to one embodiment of this disclosure. The authorization apparatus 40 and the data storing apparatus 70 described above may be physically configured as a computer apparatus including a processor 1001, a storage device 1002, an auxiliary storage device 1003, a communication device 1004, an input device 1005, an output device 1006, a bus 1007, and the like. Network node apparatuses other than the authorization apparatus 40 and the data storing apparatus 70 have the configuration shown in Fig. 13.

Note that, in the following description, the word "apparatus" can be replaced with a circuit, a device, a unit, or the like. The hardware configuration of the base station 10 and the terminal 20 and the like may be configured to include one or a plurality of apparatuses illustrated in the drawings, or may be configured not to include a part of the apparatuses.

Each function of the authorization apparatus 40 and the data storing apparatus 70 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the authorization apparatus 40 shown in FIG. 11 may be attained by a control program that is stored in the storage device 1002 and is operated by the processor 1001. Also, for example, the control unit 240 of the data storing apparatus 70 shown in FIG. 12 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the authorization apparatus 40 and the data storing apparatus 70 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

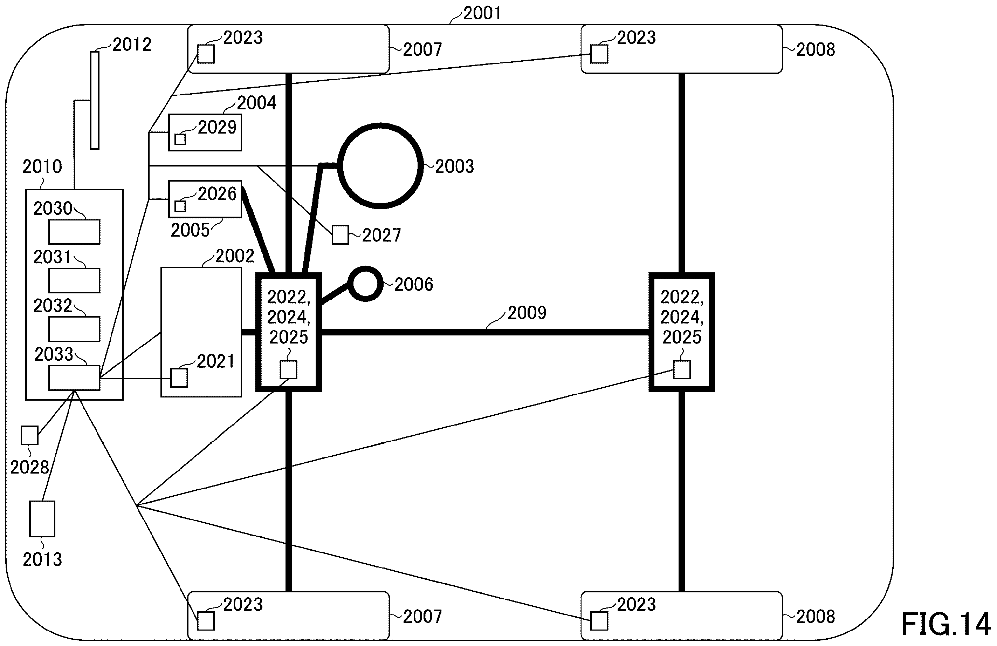

The authorization apparatus 40 or the data storing apparatus 70 may be provided in a vehicle 2001. FIG. 14 shows a configuration example of a vehicle 2001 according to the present embodiment. As shown in FIG. 14, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The authorization apparatus 40 and the data storing apparatus 70 of the aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, etc.) that receives input from external sources and may also include an output device (for example, a display, a speaker, an LED lamp, a touch panel, etc.) that provides output to external destinations.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of, signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the authorization apparatus 40 and the data storing apparatus 70 have been described by using a functional block diagram, but such an apparatus may be attained by hardware, software, or a combination thereof. Each of software that is operated by a processor of the base station 10 and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G),xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated, or specified on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the user terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may be different for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

20 terminal
30 CAPIF core apparatus
40 authorization apparatus
50 user information exposure apparatus
60 application server
65 information server
70 data storing apparatus
80 data management apparatus
90 NEF
100 FIDO server
110 transmission unit
120 reception unit
130 configuration unit
140 control unit
210 transmission unit
220 reception unit
230 configuration unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A network node apparatus comprising:
a reception unit configured to receive an authentication request from an application server that receives an access from a terminal;
a transmission unit configured to transmit an inquiry about presence or absence of specific information to another network node apparatus by using secret information generated from the specific information included in the authentication request; and
a control unit configured to determine a transmission destination of the authentication request based on a response to the inquiry.

2. The network node apparatus as claimed in claim 1, wherein a mobile network where the network node apparatus is provided is different from a mobile network where the other network node apparatus is provided.

3. A network node apparatus comprising:
a reception unit configured to receive an inquiry about presence or absence of specific information from another network node apparatus that receives an authentication request, the inquiry including secret information generated from the specific information included in the authentication request;
a control unit configured to check presence or absence of the specific information by using the secret information; and
a transmission unit configured transmit a checking result to the other network node apparatus.

4. A communication system comprising:
a first network node apparatus and a second network node apparatus,
the first network node apparatus comprising:
a reception unit configured to receive an authentication request from an application server that receives an access from a terminal;
a transmission unit configured to transmit an inquiry about presence or absence of specific information to a second network node apparatus by using secret information generated from the specific information included in the authentication request; and
a control unit configured to determine a transmission destination of the authentication request based on a response to the inquiry, and
the second network node apparatus comprising:
a reception unit configured to receive the inquiry from the first network node apparatus;
a control unit configured to check presence or absence of the specific information by using the secret information; and
a transmission unit configured transmit a checking result to the first network node apparatus.

5. A communication method executed by a network node apparatus, the communication method comprising:
receiving an authentication request from an application server that receives an access from a terminal;
transmitting an inquiry about presence or absence of specific information to another network node apparatus by using secret information generated from the specific information included in the authentication request; and
determining a transmission destination of the authentication request based on a response to the inquiry.
